# EUROPÄISCHE PATENTSCHRIFT

(11) **EP 1 688 727 B1**
(45) Veröffentlichungstag und Bekanntmachung des Hinweises auf die Patenterteilung: **14.03.2012**
(21) Anmeldenummer: 06000767.1
(22) Anmeldetag: 14.01.2006
(51) Int. Cl.: G01L 5/10

(54) **Kraftmessvorrichtung und Dehnungsmesselement**
Force measuring device and elongation measuring element
Dispositif dynamométrique et élément d'extensomètre

(30) Priorität: 05.02.2005 DE 102005005354
(43) Veröffentlichungstag der Anmeldung: 09.08.2006
(73) Patentinhaber: Bosch Rexroth Aktiengesellschaft, 70184 Stuttgart (DE)
(72) Erfinder: Steprath, Werner, 41542 Dormagen (DE)

(56) Entgegenhaltungen:
- EP-A- 0 789 234
- DE-A1- 3 238 951
- DE-A1- 4 103 765
- GB-A- 853 755
- US-A- 3 621 437
- US-A- 3 853 000
- US-A- 4 047 427
- US-A- 4 203 318
- US-A- 4 367 656

## Beschreibung

Die Erfindung betrifft eine Kraftmessvorrichtung in Form eines kraftübertragenden Bauteils mit einem an dem Bauteil gehaltenen Dehnungsmesselement, das die kraftabhängige Dehnung des Bauteils in ein elektrisches Signal umformt. Des Weiteren betrifft die Erfindung ein Dehnungsmesselement, das die kraftabhängige Dehnung eines Bauteils erfasst.

Ein Zugkraftaufnehmer ist aus der DE 41 03 765 A1 bekannt. Eine Lasche, die an ihren beiden Längsenden je ein Auge besitzt, ist in dem Bereich zwischen den Augen von zwei Seiten mit einer zylinderförmigen Vertiefung versehen. Auf den Boden der Vertiefungen ist ein als Dehnungsmesselement dienender Dehnungsmessstreifen geklebt. Die Lasche ist beispielsweise in den Kraftfluss eines eine Last transportierenden Krans eingefügt. Dabei verformt sich die Lasche entsprechend der Kraft, mit der sie beaufschlagt ist. Die Verformung der Lasche verformt in gleicher Weise den auf den Boden der Vertiefung geklebten Dehnungsmessstreifen. Dabei ändert sich das elektrische Ausgangssignal des Dehnungsmessstreifens entsprechend der Verformung des Dehnungsmessstreifens.

Der bekannte Kraftaufnehmer ist zur Messung von Kräften im groben Kran- und Schiffsbetrieb bis zu einer Größenordnung von einigen hundert Tonnen vorgesehen. Sollen demgegenüber kleinere Kräfte gemessen werden, ist die von der Belastung abhängige Verformung der Lasche zu klein, um ein verwertbares elektrisches Ausgangssignal des Dehnungsmessstreifens zu erhalten.

Gemäß der GB 853 755 ist eine Trägerplatte mittels einer Schraub-Klemmverbindung auf einem Bauteil befestigt um die Dehnung des Bauteils zu erfassen. An der Unterseite der Trägerplatte ist eine kreisförmige, sacklochartige Aushöhlung gebildet. An den Seitenwänden der Aushöhlung sind vier Dehnmessstreifen in einer Kreuzanordnung befestigt.

Die US 4 367 656 A schlägt vor an einem Unterlenker durch ein Ausfräsen eine Trägerkontur für einen Dehnmessstreifen zu bilden. Die Trägerkontur ist dabei ein fester Bestandteil des Unterlenkers.

Die US 4 203 318 A gibt eine rohrförmige Gewichtsmesszelle an. In einem Gehäusebauteil ist in einer Längsbohrung ein Trägerrohr eingebracht. Das Trägerrohr ist hohl und besitzt einen Abschnitt an dem sein Querschnitt verringert ist. In diesem Abschnitt ist an der Innenwand des Trägerrohrs ein Dehnmessstreifen befestigt. Anstelle des Trägerrohrs kann eine Stange treten, die einen plättchenförmig ausgebildeten Mittelabschnitt besitzt. Bei dieser Bauform ist der Dehnmessstreifen auf dem Mittelabschnitt befestigt. Die Befestigung des Trägerrohrs oder der Stange erfolgt durch einen daran ausgebildeten Flansch und mittels einer Überwurfmutter, ggf. durch Einpressen in die Längsbohrung oder durch einen Flansch und einen Einlegestift.

Gemäß der DE 32 38 951 A besitzt ein Kraftmesswandler ein in einem Gehäuse montiertes kreisförmiges Trägerplättchen. Das Trägerplättchen besitzt Aussparungen, wodurch sich sternförmig angeordnete Stege ergeben. Auf den Stegen sind Dehnmessstreifen angeordnet. Über eine zentral auf das Trägerplättchen aufgesetzte Stange wird die zu messende Kraft eingeleitet.

In der US 4 047 427 A ist vorgeschlagen, eine Plattform für Maschinen mit einer Kraftmesseinrichtung auszustatten. Die Plattform stützt sich über Einstellschrauben auf Trägerplatten ab. Nahe der Stützstelle sind auf den Trägerplatten je ein Dehnmessstreifen angeordnet.

Die EP 0 789 234 A1 befasst sich mit einem Kraftmessbolzen, mit dem die an einem Gelenk übertragenen Kräfte gemessen werden können. Der Kraftmessbolzen besitzt in seiner Scherzone angeordnete mit Dehnmessstreifen bestückte Träger. Die Träger sind auf einer Schulter einer gestuften Radialbohrung angeordnet und mit der Schulter verschweißt. Die Radialbohrung wird durch einen Pfropfen verschlossen, der eingeschweißt und abgedreht wird. Die Verkabelung erfolgt durch eine Längsbohrung, die sich mit der Radialbohrung schneidet.

In der DE 41 03 765 A1 ist eine Zuglasche mit Kraftmessfunktionalität angegeben. Am Boden einer gestuften, kreisförmigen Ausfräsung sind Dehnmesselemente angeordnet. Die Ausfräsung ist durch einen aufgeschweißten Deckelaufsatz abgedichtet.

Die US 3,853,000 A schlägt ein Dehnungsmessmodul vor, bei dem eine taillierte Trägerplatte mit Dehnmessstreifen versehen ist. Die Trägerplatte besitzt an der Unterseite spitze Stifte, welche den Kontakt zu einem Bauteil herstellen sollen. Die Trägerplatte wird in ein Gehäuse eingesetzt, welches Aussparungen für die Stifte besitzt. Das Gehäuse wird mit einer Vergussmasse gefüllt und mit einem Deckel geschlossen. Durchgangsbohrungen durch Gehäuse und Trägerplatte erlauben die Verschraubung des Dehnungsmessmoduls mit dem Bauteil.

Die US 3,621,437 A zeigt ein Dehnungsmessmodul, bei dem Dehnmessstreifen an einem Träger angeordnet sind. Der Träger ist von zwei kalottenartigen Bolzen durchsetzt. Die Bolzen sind mit Schrauben an einem Bauteil befestigt. Ein U-förmiges Profil umgibt den Träger zum Schutz vor Umwelteinflüssen.

Es ist die Aufgabe der vorliegenden Erfindung, den Arbeitsaufwand bei der Ausrüstung eines Bauteils mit einem Dehnmesselement möglichst gering zu halten.

Diese Aufgabe wird erfindungsgemäß durch ein Dehnungsmesselement mit den Merkmalen des Anspruchs 1 sowie eine Kraftmessvorrichtung mit den Merkmalen des Anspruchs 5 gelöst.

Durch den zweiteiligen Aufbau des eingesetzten Dehnungsmesselements aus einem Trägerelement und einem Weggeber, und durch die besondere Form des Trägerelements, das die Dehnung auf einer großen Länge des Bauteils erfasst und auf einen kleinen querschnittsreduzierten Abschnitt projiziert, auf dem der Weggeber angeordnet ist, erfolgt eine Verstärkung der kraftabhängigen Verformung des kraftübertragenden Bauteils. Durch die so erzielte Vergrößerung der Verformung des Trägerelements im Bereich des Weggebers ergibt sich eine entsprechende Erhöhung des elektrischen Ausgangssignals des Weggebers. Somit kann an einem Bauteil, das z.B. zur Aufnahme einer mechanischen Biegebelastung entsprechend kräftig ausgebildet ist, eine der Biegebelastung unabhängig überlagerte Zugbelastung zuverlässig gemessen werden.

Das Dehnungsmesselement ist als vormontierte Baueinheit zum Einsetzen in eine Vertiefung des Bauteils ausgebildet und weist zusätzlich zum Trägerelement und dem Weggeber wenigsten einen Deckel zum Abdecken der Vertiefung, eine elektronische Verstärkerschaltung, um ein elektrisches Signal des Weggebers zu verstärken, und eine zwischen dem Deckel und dem Trägerelement vorgesehene elastische Vergussmasse auf. Dabei ist die dem Deckel abgewandte Seite der Befestigungsabschnitte jeweils von der Vergussmasse nicht bedeckt. Eine solche Baueinheit lässt sich mit geringen Installationsaufwand in bestehende Bauteile integrieren bzw. erleichtert die Fertigung von Kraftaufnehmern. Durch die Integration einer Verstärkerschaltung in der vormontierten Baueinheit lassen sich Übertragungsstörungen des Weggebersignals vermeiden. Zudem stellt die Verstärkerschaltung ein robustes, KFZ-gerechtes Messsignal bereit. Die Vergussmasse schützt den Weggeber und die Verstärkerschaltung vor Beschädigung durch Witterung oder eindringenden Schmutz.

Zudem erfolgt die Befestigung des Trägerelements am Bauteil über eine Klemmverbindung. Durch die Klemmverbindung kommt ein Reibschluss zwischen Trägerelement und Bauteil zustande. Somit wirken keine durch die Befestigung hervorgerufenen Fremdspannungen auf das Dehnungsmesselement ein, so dass das Dehnungsmesselement die Dehnung ohne Abgleich präzise und zuverlässig misst. Außerdem wird durch das Vorsehen einer Klemmverbindung ein Überlastschutz des Dehnungsmesselements erzielt.

Vorteilhafte Weiterbildungen der Erfindung sind in den Unteransprüchen gekennzeichnet.

Eine Ausnehmung, über dem der Dehnungsabschnitt sowie die daran angrenzenden Abschnitte des Trägerelements angeordnet sind, gewährleistet im Abschnitt zwischen den Befestigungsabschnitten die freie Beweglichkeit des Trägerelements gegenüber dem Bauteil. Dadurch wird die unterschiedliche Längung einzelner Abschnitte des Trägerelements zuverlässig ermöglicht. Die Anordnung des Dehnungsmesselements am Boden einer Vertiefung im Bauteil schützt dieses vor mechanischer Beschädigung. Ist die Vertiefung so gestaltet, dass das Dehnungsmesselements im Bereich der neutralen Faser des Bauteils liegt, so ist das Ausgangssignal des Weggebers unabhängig von einer Biegebeanspruchung des Bauteils.

Die Klemmverbindung ist in bevorzugter Weise als Deckel, der am Bauteil gehalten wird und die Vertiefung abdeckt, und zwischen dem Deckel und dem Trägerelement eingespannten Stiften ausgebildet. Dadurch wird eine einfache Klemmbefestigung erzielt, die in der Lage ist auch größere Fertigungstoleranzen beim Fertigen der Vertiefung auszugleichen. Dazu ist vorzugsweise die Länge der Stifte so bemessen, dass sie über den Rand der Vertiefung herausstehen und der Deckel ist unter Beibehaltung einer Restelastizität plastisch verformbar.

Der Weggeber ist in vorteilhafter Weise als Dehnungsmessstreifen oder als magneto-elastischer Geber ausgebildet. In vorteilhafter Weise ist das Trägerelement als Keramikplatine ausgebildet und mit einem oder mehreren Dünnschicht-Dehnungsmessstreifen versehen.

Um die Kraft zu messen, mit der ein an einer landwirtschaftlichen Maschine gehaltenes Anbaugerät an ihr angreift, wird das Dehnungsmesselement in einer Vertiefung eines Unterlenkers eines Hubwerks angeordnet, über den das Anbaugerät an der landwirtschaftlichen Maschine gehalten ist. Das Bauteil für die Aufnahme des Dehnungsmesselements kann auch als Lasche ausgebildet sein, die an ihren Längsenden mit jeweils einem Auge für die Aufnahme von Verbindungselementen, wie z. B. Bolzen, versehen ist. Diese Ausgestaltung erlaubt einen universellen Einsatz der erfindungsgemäßen Kraftmessvorrichtung, z. B. auch im Kraftfluss von Hebezeugen.

Die Erfindung wird im Folgenden mit ihren weiteren Einzelheiten anhand von in den Zeichnungen dargestellten Ausführungsbeispielen näher erläutert. Es zeigen
- Figur 1: einen Ackerschlepper mit einem an seiner Rückseite gehaltenen Hubwerk für einen Pflug,
- Figur 2a: die Seitenansicht eines Abschnitts eines Unterlenkers, über den sich das Hubwerk an dem Ackerschlepper abstützt,
- Figur 2b: einen Schnitt A-B durch den in der Figur 2a dargestellten Bereich des Unterlenkers,
- Figur 3a: eine Draufsicht auf ein erfindungsgemäß ausgebildetes Dehnungsmesselement,
- Figur 3b: ein Längsschnitt durch den Einbaubereich im Unterlenker mit Seitenansicht des in Figur 3a dargestellten Dehnungsmesselements und,
- Figur 3c: ein Längsschnitt des Einbaubereichs des Dehnungsmesselements, wobei die Befestigungsabschnitte mit einer Verzahnung versehen sind,
- Figur 4a: ein Längsschnitt des Einbaubereichs des Dehnungsmesselements, wobei die Befestigung des Trägerelements über Federpakete erfolgt,
- Figur 4b: ein Längsschnitt des Einbaubereichs des Dehnungsmesselements, wobei die Befestigung des Trägerelements über eingespannte Stifte erfolgt,
- Figur 5a: ein Querschnitt durch den Einbaubereich des Dehnungsmesselements hinsichtlich der in Figur 4b dargestellten Befestigungsvariante im Zustand vor der Montage des Deckels,
- Figur 5b: der in Figur 5a dargestellte Querschnitt nach Montage des Deckels durch Schraubverbindungen,
- Figur 5c: der in Figur 5b dargestellte Querschnitt nach Lösen der Schraubverbindungen,
- Figur 6: ein Dehnungssensor in Form eines vormontierten, teilweise vergossenen Bauteils,
- Figur 7a: ein mit mehreren Dehnungsmessstreifen bestücktes Trägerelement in Draufsicht,
- Figur 7b: das in Figur 7a dargestellte Trägerelement in Seitenansicht,
- Figur 7c: die elektrische Verschaltung der auf dem in Figur 7a und 7b dargestellten Dehnungsmessstreifen,
- Figur 8a: die Seitenansicht eines als Lasche ausgebildeten Kraftaufnehmers und
- Figur 8b: einen Schnitt durch die in der Figur 4a dargestellte Lasche.

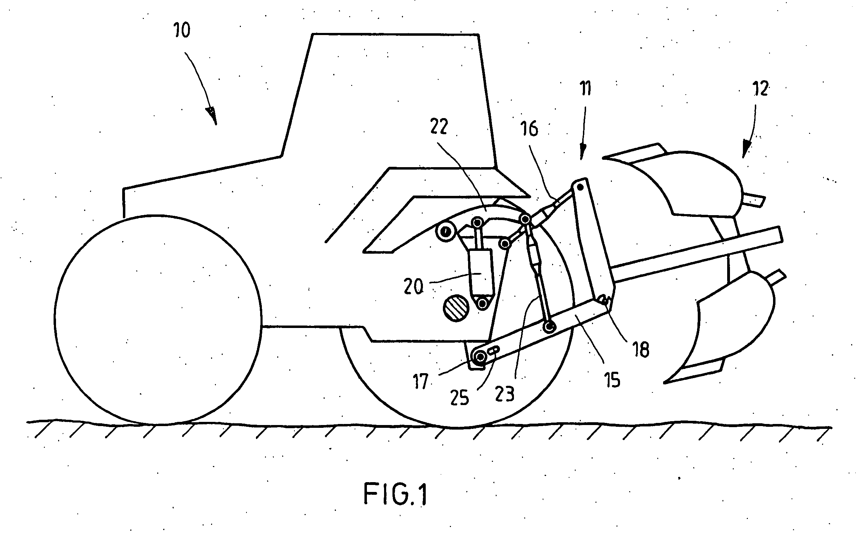

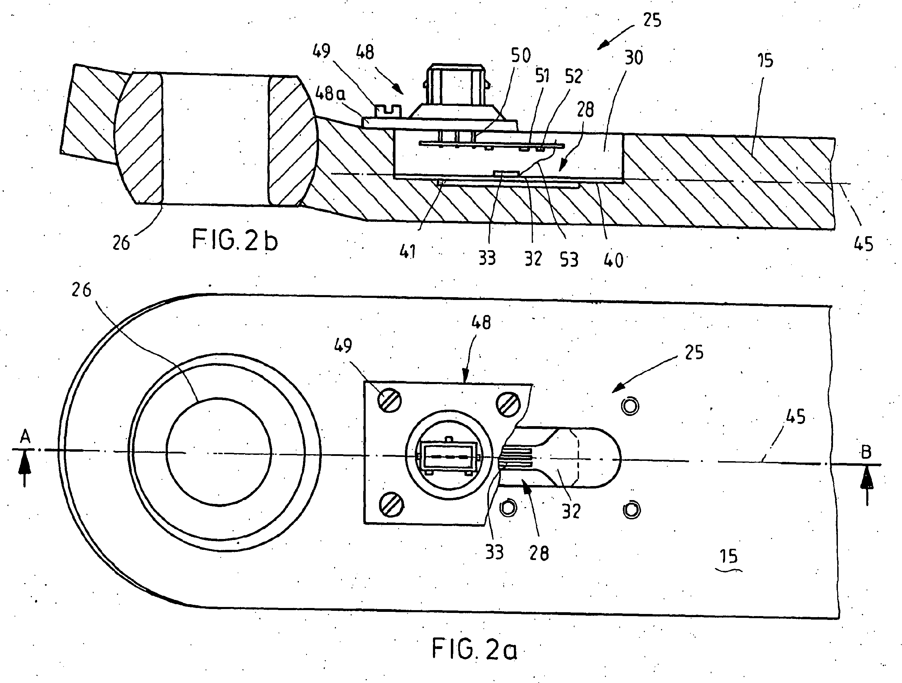

Die Figur 1 zeigt in schematischer Darstellung einen Ackerschlepper 10, an dessen Rückseite ein Hubwerk 11 mit einem Pflug 12 gehalten ist. Der Ackerschlepper 10 dient hier als Beispiel für eine landwirtschaftliche Maschine. Das Hubwerk 11 stützt sich über verschiedene Lenker an der Rückseite des Ackerschleppers 10 ab. Von diesen Lenkern sind in der Figur 1 ein Unterlenker 15 und ein Oberlenker 16 dargestellt. Der Unterlenker 15 ist über ein erstes Drehgelenk 17 an dem Ackerschlepper 10 gehalten. Über ein zweites Drehgelenk 18 ist ein Anbaugerät wie der Pflug 12 an dem Unterlenker 15 gehalten. Der Unterlenker 15 ist an seinen Längsenden mit je einem Auge versehen, das jeweils einen Teil der Drehgelenke 17 bzw. 18 bildet. Ein derartiges Auge ist in den Figuren 2a und 2b dargestellt. Ein hydraulischer Zylinder 20 hebt und senkt das Hubwerk 11 über ein aus einem Hebel 22 und einer Stange 23 gebildetes Gestänge. An dem Unterlenker 15 ist in der Nähe des Drehgelenks 17 ein Kraftsensor 25 angeordnet. Einzelheiten des Kraftsensors 25 sind im Folgenden anhand der Figuren 2a bis 7c beschrieben.

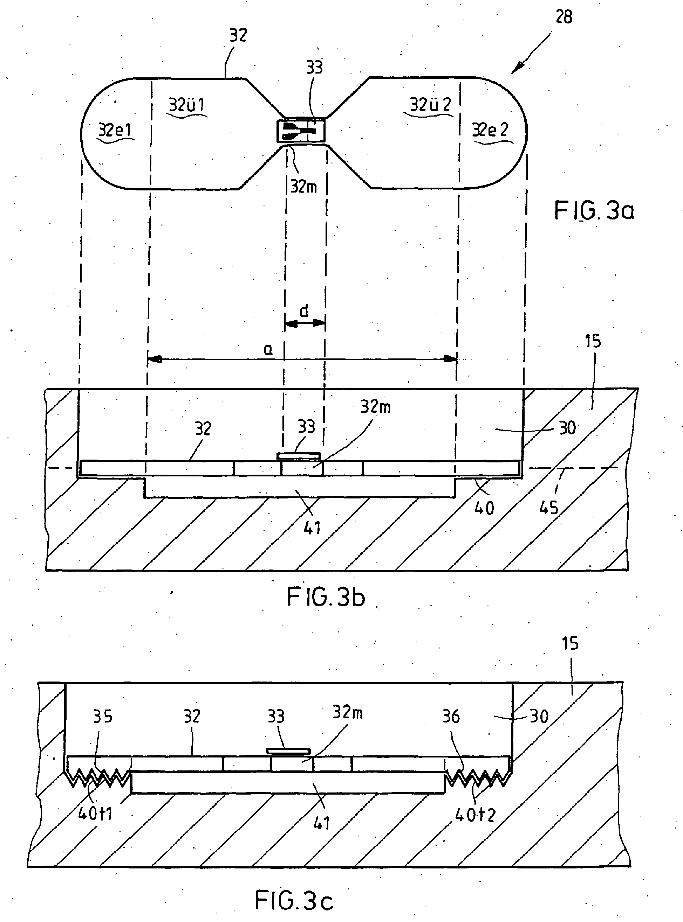

Die Figur 2a zeigt in gegenüber der Figur 1 stark vergrößerter Darstellung einen Teilbereich des Unterlenkers 15 mit einem Auge 26 und dem Kraftsensor 25. Bei dem Auge 26 handelt es sich um das Auge des Unterlenkers 15, das Bestandteil des Drehgelenks 17 ist. Der Kraftsensor 25 ist in der Nähe des maschinenseitigen Auges 26 des Unterlenkers 15, angeordnet. Die Figur 2b zeigt einen Schnitt entlang der Linie A - B. Der Kraftsensor 25 besteht im Wesentlichen aus einem Dehnungsmesselement 28, das in einer Vertiefung 30 des Unterlenkers 15 gehalten ist. In den Figuren 3a und 3b sind Einzelheiten des Dehnungsmesselements 28 dargestellt.

Die Figur 3a zeigt eine Draufsicht auf das Dehnungsmesselement 28 in vereinfachter Darstellung, während die Figur 3b eine Längsansicht des Dehnungsmesselements 28 in dem in Fig. 2b dargestellten Einbaubereich zeigt. Das Dehnungsmesselement 28 besteht aus einem streifenförmigen Trägerelement 32 und einem als Weggeber dienenden Dehnungsmessstreifen 33. Das Trägerelement 32 weist in seiner Längsrichtung zwei Endbereiche 32e1 und 32e2, einen Mittelbereich 32m sowie zwischen diesen liegende Übergangsbereiche 32ü1 und 32ü2 auf. Der Abstand zwischen den Endbereichen 32e1 und 32e2 ist mit a bezeichnet. Der Mittelbereich 32m ist schmäler ausgebildet als die Endbereiche 32e1 und 32e2 und auch schmäler als die Übergangsbereiche 32ü1 und 32ü2. Dies bedeutet, dass der Querschnitt des Trägerelements 32 im Mittelbereich 32m kleiner als in den übrigen Bereichen des Trägerelements 32 ist. Der Dehnungsmessstreifen 33 ist mit dem Trägerelement 32 in dessen Mittelbereich 32m fest verbunden, z. B. durch eine Klebverbindung. Der Dehnungsmessstreifen 33 ist so ausgerichtet, dass er die Dehnung des Mittelbereichs 32m in der Längsrichtung des Trägerelements 32 misst.

Wie in der Figur 2b bzw. 3b dargestellt, ist das Trägerelement 32 des Dehnungsmesselements 28 an dem mit dem Bezugszeichen 40 versehenen Boden der Vertiefung 30 gehalten. Dabei sind nur die Endbereiche 32e1 und 32e2 des Trägerelements 32 am Boden der Vertiefung über eine Klebverbindung befestigt. Sowohl die Übergangsbereiche 32ü1 und 32ü2 als auch der Mittelbereich 32m sind dagegen nicht mit dem Boden 40 verbunden. Die Vertiefung 30 kann hierfür mit einer zusätzlichen Ausnehmung 41 versehen sein, die so ausgebildet ist, dass das Trägerelement 32 nur in den Endbereichen 32e1 und 32e2 auf dem Boden 40 der Vertiefung 30 aufliegt. Das Trägerelement 32 ist somit zwischen den Endbereichen 32e1 und 32e2 relativ zu dem Unterlenker 15 beweglich, wenn dieser mit einer in Längsrichtung wirkenden Kraft beaufschlagt wird.

Auf den Unterlenker 15 wirkt zusätzlich zur Zug- oder Druckbelastung eine erhebliche Biegelast in vertikaler Richtung beim Halten bzw. Ausheben eines landwirtschaftlichen Anbaugeräts ein (siehe Figur 1). Zudem kann eine Biegebelastung quer zur Schlepprichtung auftreten. Um die Zugkraft unabhängig von solchen quer zur Unterlenkerlängsachse auftretenden Biegelasten zu messen, ist die Vertiefung 30 so ausgebildet, dass das Dehnungsmesselement 28 in der hinsichtlich der beiden Biegerichtungen gemeinsamen neutralen Faser 45 des Unterlenkers 15 liegt. Somit hat eine Biegebeanspruchung des Unterlenkers 15 keinen Einfluss auf das Ausgangssignal des Weggebers 33.

Da das Trägerelement 32 in seinem Mittelbereich 32m schmäler ist als in den restlichen Bereichen, längt es sich bei Beaufschlagung mit einer in Längsrichtung wirkenden Zugkraft ungleichmäßig über seine Länge. Bei konstanter Dicke des Trägerelements 32 ist die Längung von der Breite des Trägerelements 32 abhängig, wobei in schmalen Bereichen eine größere Längung des Trägerelements 32 erfolgt. Diesen Effekt nutzt die Erfindung aus. Die Breite des Trägerelemerits 32 wird so gewählt, dass bei einer Kraftbeaufschlagung eine Längung praktisch nur in dem Mittelbereich 32m erfolgt, wo der Dehnungsmessstreifen 33 angeordnet ist, und dass in den restlichen Bereichen die Längung vernachlässigbar klein ist. Vergrößert sich der Abstand a zwischen den Endbereichen 32e1 und 32e2 bei einer Kraftbeaufschlagung um den Wert Δa, so vergrößert sich der Mittelbereich 32m und mit diesem auch der Dehnungsmessstreifen 33 ebenfalls um den Wert Δa. Der Dehnungsmessstreifen 33 wird somit stärker gelängt, als dies bei einem direkt an dem Unterlenker 15 befestigten Dehnungsmessstreifen der Fall wäre. Bezeichnet man die Länge des Mittelbereichs 32m mit "d", so vergrößert sich das Ausgangssignal des Dehnungsmessstreifens 33 um den Faktor a/d gegenüber dem Fall, in dem der Dehnungsmessstreifen 33 direkt an dem Unterlenker 15 befestigt ist.

Um die Festigkeit der Klebeverbindung der Endbereiche 32e1 und 32e2 mit dem Boden 40 der Vertiefung 30 zu erhöhen, können die Endbereiche 32e1 und 32e2 zusätzlich mit einer Verzahnung 35 bzw. 36 versehen sein, wie in Figur 3c dargestellt. Bei der Verzahnung handelt es sich um eine Kerbverzahnung. Dabei greifen die Verzahnungen 35 und 36 in entsprechend ausgebildete Gegenverzahnungen 40t1 und 40t2 des Bodens 40 ein. Dabei sollte zwischen den gegenüberliegenden Verzahnungen genügend Spiel bestehen um eine verspannungsfreie Befestigung des Trägerelements 32 zu gewährleisten.

Wie in Figur 2a und 2b dargestellt, erfolgt der elektrische Anschluss des Dehnungsmessstreifens 33 über einen Stecker 48. Der Stecker 48 ist mit sechs Schrauben 49 an dem Unterlenker 15 befestigt. Dabei bildet der Flanschbereich 48a des Steckers 48 einen Deckel, so dass der Stecker 48 die Vertiefung 30 vollständig abdeckt. Um die Vertiefung 30 noch besser gegen das Eindringen von Staub oder Feuchtigkeit abzudichten, kann bei Bedarf zusätzlich eine die Vertiefung 30 umschließende Dichtung zwischen dem Stecker 48 und dem Unterlenker 15 angeordnet werden. An den in die Vertiefung 30 ragenden Teilen der Anschlussstifte 50 des Steckers 48 ist eine Leiterplatte 51 gehalten. Die Anschlussstifte 50 dienen gleichzeitig als elektrische Verbindung zwischen dem Stecker 48 und der Leiterplatte 51. Die Leiterplatte 51 bildet zusammen mit den auf ihr angeordneten elektrischen Bauteilen 52 einen Messverstärker zum Auslesen und Verstärken des Signals des Dehnungsmessstreifens 33. Der Dehnungsmessstreifen 33 ist über Anschlussdrähte 53 mit der Leiterplatte 51 verbunden. Das Signal des Dehnungsmessstreifens 33 beträgt üblicherweise nur einige mV. Der Messverstärker ist daher möglichst nah am Dehnungsmessstreifen angeordnet, um den Einfluss von Übertragungsfehlern und Störsignalen zu vermindern. Am Ausgang des Messverstärkers erhält man ein robustes, KFZ-gerechtes Signal mit einer Signalspannung zwischen 0V und 10V, wobei der unbelastete Zustand durch eine Spannung von 5V signalisiert wird.

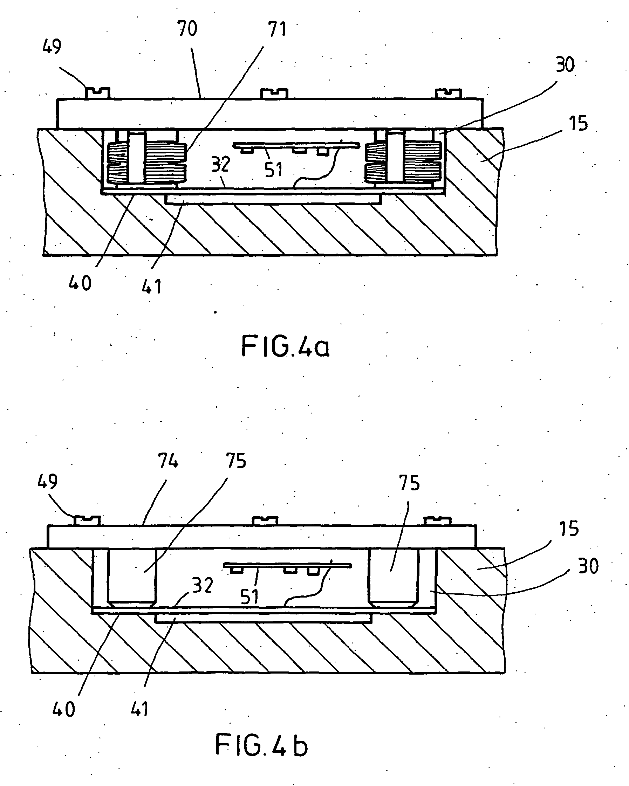

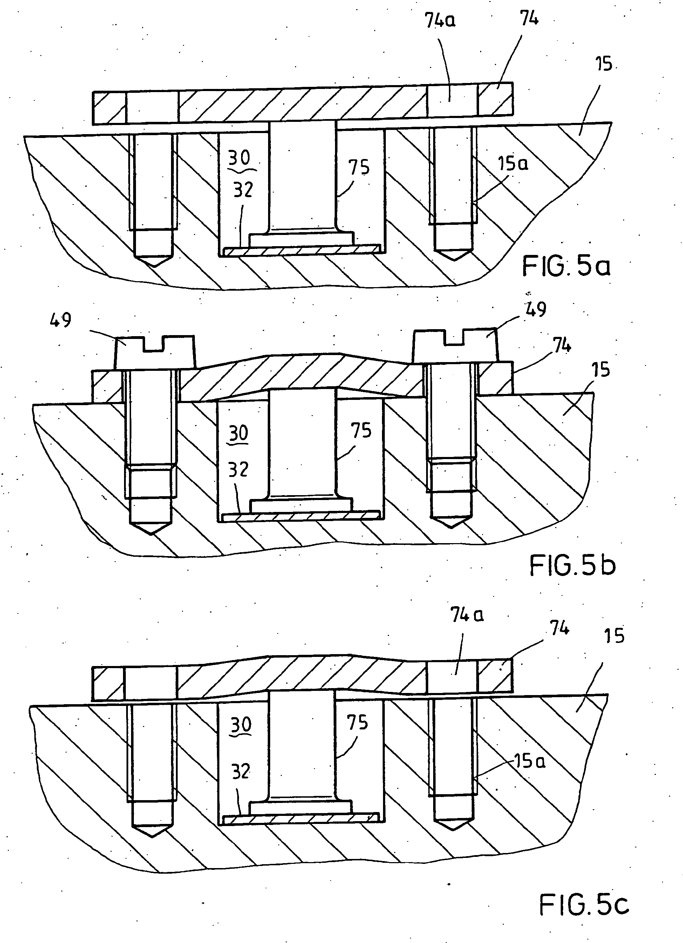

Anhand der Figuren 4a, 4b, 5a, 5b und 5c werden nun alternative Befestigungsmöglichkeiten für das Dehnungsmesselement 28, insbesondere das Trägerelement 32 beschrieben. Bei diesen Befestigungsvarianten ist das Trägerelement 32 an seinen äußeren Endabschnitten 32e1 und 32e2 durch Reibschluss mit dem Boden 40 der Vertiefung 30 verbunden. Dazu ist eine Klemmbefestigung vorgesehen, die die Endabschnitte 32e1 und 32e2 an den Boden 40 der Vertiefung 30 anpresst. Gegebenenfalls sind die Kontaktflächen angeraut, um einen stärkeren Reibschluss zu erzielen.

Wie in Figur 4a dargestellt, wird die Vertiefung 30 durch einen auf ihr befestigten Deckel 70 abgedeckt. Der Deckel 70 ist über Schrauben 49 mit dem Unterlenker 15 verschraubt. Zwischen dem Deckel 70 und dem Trägerelement 32 sind Federpakete 71 eingespannt, welche die Endabschnitte 32e1, 32e2 (siehe Figur 3a, 3b) des Trägerelements 32 an dem Boden 40 anpressen. Die Anpresskraft ist dabei so gewählt, dass der dadurch erzeugte Reibschluss die Dehnungskräfte, die für die Längung des Trägerelements 32 notwendig sind, zuverlässig überträgt. Da das Trägerelement 32, insbesondere der Mittelbereich 32m, nur einen geringen Querschnitt hat, sind die für seine Längung erforderlichen Dehnungskräfte sehr gering.

Eine weitere Variante der Klemmbefestigung ist in Figur 4b dargestellt. Zwischen einem Deckel 74, der mit dem Unterlenker 15 verschraubt ist, und dem Trägerelement 32 sind Stifte 75 eingespannt. Durch die Stifte 75 werden die Endabschnitte 32e1, 32e2 des Trägerelements 32 an den Boden 40 der Vertiefung 30 angepresst. Eine Aussparung 41 gewährleistet, dass nur die Endabschnitte 32e1, 32e2 des Trägerelements 32 mit dem Unterlenker 15 verbunden sind. Die Einspannkraft auf die Stifte 75 wird durch eine elastische Verformung des Deckels 74 aufgebracht. Die Befestigung des Deckels 74 und das Einspannen der Stifte 75 ist in den Figuren 5a, 5b und 5c dargestellt.

Die Figuren 5a, 5b und 5c zeigen einen Querschnitt durch den Unterlenker 15 im Bereich gegenüberliegender Schrauben 49. Weiter sind der Deckel 74, darin angebrachte Bohrungen 74a, die Vertiefung 30, das Trägerelement 32 sowie die Stifte 75 dargestellt. Die Stifte 75 haben in Bezug auf die Tiefe der Vertiefung 30 zwischen deren Oberkante und dem Trägerelement eine Überlänge, d.h. sie stehen etwas aus der Vertiefung 30 hervor. Zur Befestigung der Stifte 75 und des Deckels 74 werden die Stifte 75 über den Endabschnitten 32e1, 32e2 des Trägerelements 32 angeordnet. Der Deckel 74 wird mit seinen Bohrungen 74a gegenüber entsprechenden Gewindebohrungen 15a im Unterlenker 15 angeordnet. Bei Einsetzen und Anziehen der Schrauben 49 verformt sich der Deckel 74 unter Beibehaltung einer Restelastizität plastisch, wie in Figur 5b dargestellt. Nach Entfernen der Schrauben 49 bleibt der Deckel 74 plastisch verformt, wie in Figur 5c gezeigt. Die vorhandene Restselastizität bewirkt die Einspannkraft auf die Stifte 75. In geeigneter Weise ist der Deckel 74 aus einem dünnen Metallblech gefertigt. Durch die Stärke des Metallblechs lässt sich die Einspannkraft festlegen. Diese Klemmbefestigungsvariante erlaubt durch die plastische Verformbarkeit des Deckels große Toleranzen beim Fertigen der Vertiefung 30, so dass die Vertiefung 30 bzw. ein Unterlenker 15 der eine solche Vertiefung 30 aufweist kostengünstig herstellbar ist. Außerdem könneri auch unterschiedliche Materialstärken des Trägerelements ausgeglichen werden.

Durch die beschriebenen Klemmbefestigungen erzielt man eine einfache und zuverlässige Befestigung des Trägerelements 32 am Boden 40. Mechanische Fremdspannungen, wie sie bei einem Verschweißen oder Verschrauben des Trägerelements 32 mit dem Boden 40 auftreten können, treten nicht auf. Somit ist das Dehnungsmesselement 28 sofort nach dem Einbau betriebsbereit, ohne dass ein Abgleich von mechanischen Fremdspannungen durchzuführen ist. Außerdem lässt sich bei einer Klemmbefestigung in einfacher Weise ein Überlastschutz des Trägerelements 32 und darauf angebrachter Dehnungsmessstreifen 33 erzielen, indem die Anpresskraft so gewählt wird, dass der Reibschluss höchstens die maximal zulässige Dehnkraft überträgt.

Um den Arbeitsaufwand für die Ausrüstung eines Unterlenkers mit dem erfindungsgemäßen Kraftsensor 25 gering zu halten, kann das Dehnungsmesselement 28, der Messverstärker und die Befestigungseinrichtung als vormontierter Dehnungsmesssensor bereitgestellt werden.

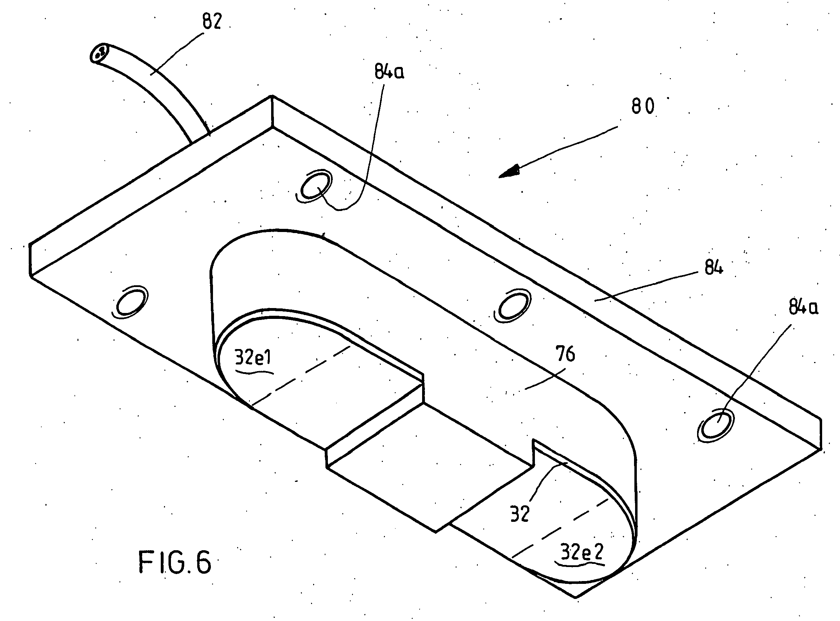

In Figur 6 ist ein solcher vormontierter Dehnungsmesssensor 80 dargestellt. Der Dehnungsmesssensor 80 ist so ausgebildet, dass er einfach in eine am Unterlenker 15 angebrachte Vertiefung 30 einsetzbar ist. Die Abmessungen des Dehnungsmesssensors 80 sind zusammen mit der Tiefe der Vertiefung so gewählt, dass die Dehnungsmessung in der neutralen Faser des Unterlenkers 15 erfolgt. An dem Deckel 84, der zur Verschraubung mit dem Unterlenker 15 Bohrungen 84a aufweist, setzt eine elastische Vergussmasse 76 an. Diese umschließt den Bereich des Dehnungsmesssensors 80 zwischen dem Deckel 84 und dem Trägerelement 32. Des Weiteren ist auch der Mittelbereich 32m des Trägerelements 32 von der Vergussmasse umschlossen, um darauf angeordnete Dehnungsmessstreifen 33 zu schützen. Die Endabschnitte 32e1, 32e2 des Trägerelements 32 sind von der Vergussmasse 76 nicht bedeckt, so dass ein zuverlässiger Reibschluss zwischen den Endabschnitten 32e1, 32e2 und dem Boden 40 der Vertiefung 30 erzielt wird. Der von der Vergussmasse 76 umschlossene Bereich enthält des Weiteren Stifte 75 oder Federpakete 71, die zwischen den Endabschnitten 32e1, 32e2 und dem Deckel 84 angeordnet sind, sowie den Messverstärker zum Verstärken der Signale des Dehnungsmessstreifens 33. Durch den Deckel 84 ist ein Kabel 82 geführt, dass die Spannungsversorgung des Messverstärkers und die Ausgangssignale führt.

Durch Einsetzen des Dehnungsmesssensors 80 in die Vertiefung 30 und Verschrauben des Deckels 84 mit dem Unterlenker 15 wird die anhand der Figuren 4a oder 4b beschriebene Klemmbefestigung erzielt. Durch die Umhüllung mit der Vergussmasse 76 werden die einzelnen Elemente des Dehnungsmesssensors 80 in Position zueinander gehalten und sind zudem vor Witterung und Schmutz geschützt. Somit ist der Dehnungsmesssensors 80 sofort nach dem Einsetzen und Verschrauben betriebsbereit.

Alternativ kann der Dehnungsmesssensor 80 auch durch Verkleben am Unterlenker 15 befestigt werden. Dann entfallen die Stifte 75 bzw. Federpakete 71. Es ist jedoch darauf zu achten, dass nur die Endabschnitte 32e1 und 32e2 des Trägerelements 32 mit dem Boden 40 der Vertiefung 30 verklebt werden. Gegebenenfalls kann noch der Deckel 84 mit der Unterlenkeraußenfläche verklebt werden.

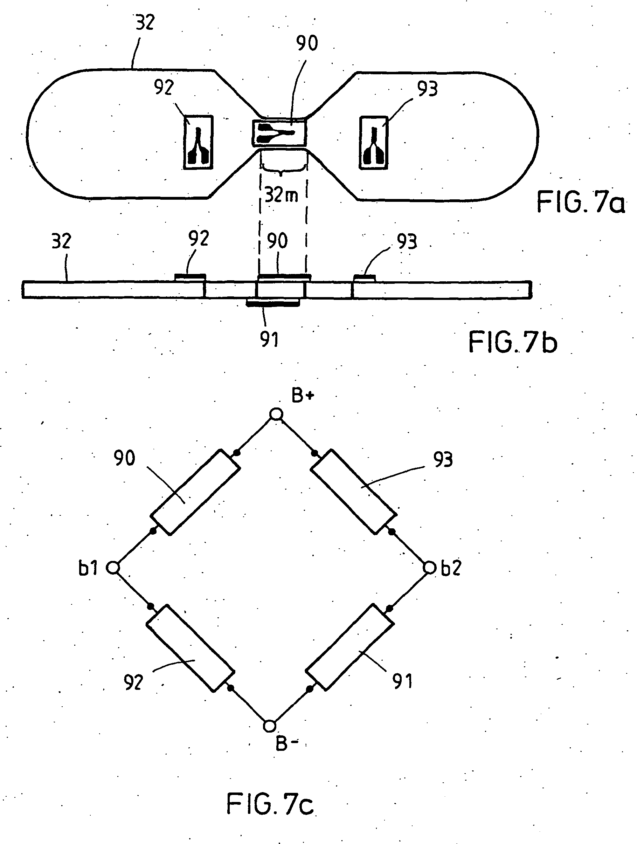

Durch Verwendung mehrerer Dehnungsmessstreifen lässt sich das Dehnungsmesselement 28 hinsichtlich der Auflösung weiter verbessern. In Figur 7a und 7b ist das schon beschriebene Trägerelement 32 dargestellt, auf dem nun mehrere Dehnungsmessstreifen 90, 91, 92, 93 angeordnet sind. Die Dehnungsmessstreifen 90 und 91 sind mit dem Mittelbereich 32m des Trägerelements 32 verbunden. Der Dehnungsmessstreifen 90 ist an der Oberseite und der Dehnungsmessstreifen 91 an der Unterseite des Trägerelements 32 angeordnet. Die Dehnungsmessstreifen 90, 91 sind so ausgerichtet, dass sie die Dehnung des Mittelbereichs 32m in Längsrichtung des Trägerelements 32 messen. Die Dehnungsmessstreifen 92 und 93 sind links bzw. rechts vom Mittelbereich 32m auf der Oberseite angeordnet und senkrecht zu den Dehnungsmessstreifen 90 und 91 ausgerichtet.

In der Figur 7c ist die elektrische Verschaltung der Dehnungsmessstreifen 90, 91, 92, 93 dargestellt. Die Dehnungsmessstreifen 90, 91, 92, 93 sind in Vollbrückenschaltung verbunden. An den Anschlussstellen B+ und B- wird die Versorgungsspannung zugeführt. An den Anschlüssen b1 und b2 wird ein Ausgangssignal für den Messverstärker abgenommen. Die Dehnungsmessstreifen 90 und 91 liegen in der Vollbrückenschaltung diagonal gegenüber, so dass eine Längenänderung des Mittelbereichs 32m zu einem größeren Signal führt als es bei der Verwendung eines einzelnen Dehnungsmessstreifens der Fall wäre. Die Dehnungsmessstreifen 92 und 93, die senkrecht zur Dehnungsrichtung angeordnet sind, dienen als Referenzwiderstände. Dadurch ist die in Figur 7a, 7b und 7c dargestellte Konfiguration von 4 Dehnungsmessstreifen weitgehend temperaturkompensiert.

Das Dehnungsmesselement kann aus einer als Trägerelement 32 dienenden Keramikplatine bestehen, die mit einem oder mehreren, als Weggeber dienenden Dünnschicht-Dehnungsmessstreifen versehen ist.

Als Weggeber kann anstelle der in den Ausführungsbeispielen eingesetzten Dehnungsmessstreifen auch ein magneto-elastischer Geber verwendet werden.

Die vorliegende Erfindung ist nicht auf in Unterlenker einsetzbare Kraftsensoren beschränkt. Allgemein betrachtet besteht die erfindungsgemäße Kraftmessvorrichtung aus einem kraftübertragenden Bauteil, an dem ein Dehnungsmesselement gehalten ist, das aus einem Trägerelement und einem Weggeber besteht. Trägerelement und Weggeber sind in einem Mittelbereich des Trägerelements fest miteinander verbunden. Mit dem kraftübertragenden Bauteil sind nur die Endbereiche des Trägerelements verbunden. Wie im Folgenden ausgeführt, lässt sich die erfindungsgemäße Kraftmessvorrichtung auf verschiedene weitere Anwendungsbereiche übertragen.

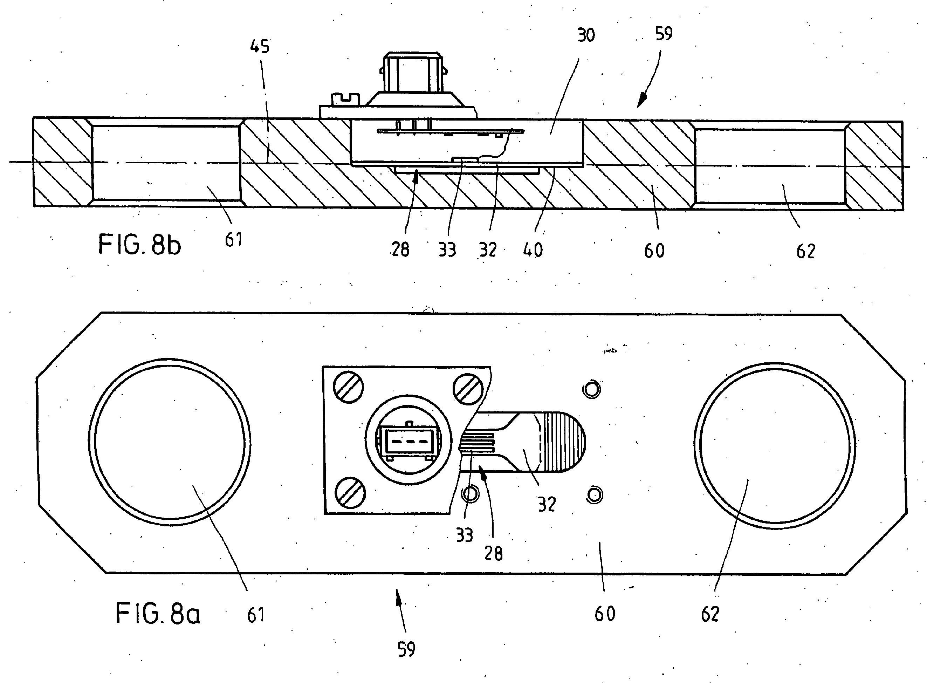

Die Figuren 8a und 8b zeigen eine erfindungsgemäßen Kraftmessvorrichtung 59, bei der das kraftübertragende Bauteil als Lasche 60 ausgebildet ist. Die Lasche 60 ist an ihren Längsenden mit je einem Auge 61 bzw. 62 versehen. Die Augen 61 und 62 dienen zur Aufnahme von Verbindungselementen für einen universellen Einsatz der Kraftmessvorrichtung, z. B. auch im Kraftfluss von Hebezeugen. Der weitere Aufbau der Kraftmessvorrichtung 59 stimmt mit dem Aufbau der in den Figuren 2a ünd.2b beschriebenen Kraftmessvorrichtung überein und wird deshalb hier nicht noch einmal im Einzelnen beschrieben. Die zuvor beschriebenen weiteren Ausgestaltungen, insbesondere die Verwendung einer Klemmbefestigung für das Trägerelement 32, oder die Integration des Dehnungsmesselements 28 in einen vormontierten Dehnungssensor 80 lassen sich auf die als Lasche 60 ausgebildete Kraftmessvorrichtung 59 ohne oder unter geringer Abwandlung übertragen.

## Patentansprüche

1. Dehnungsmesselement zum Anbringen an ein kraftübertragendes Bauteil (15, 60), zum Umformen der kraftabhängigen Dehnung des Bauteils (15, 60) in ein elektrisches Signal,
wobei
das Dehnungsmesselement als eine vormontierte Baueinheit (80) ausgebildet ist, und dass die vormontierte Baueinheit (80) umfasst:
ein längliches Trägerelement (32) welches sich in zwei in Dehnungsrichtung einen vorgegebenen Abstand (a) zueinander aufweisende Befestigungsabschnitte (32e1, 32e2) und einen Dehnungsabschnitt (32m), der zwischen den Befestigungsabschnitten (32e1, 32e2) vorgesehen ist, der in Dehnungsrichtung eine geringere Länge (d) aufweist als der Abstand (a) zwischen den Befestigungsabschnitten (32e1, 32e2) und der einen geringeren Querschnitt als das restliche Trägerelement (32) aufweist, gliedert,
einen Weggeber (33), der mit dem Dehnungsabschnitt (32m) verbunden ist, um die Dehnung des Dehnungsabschnitts (32m) zu erfassen,
eine elektronische Verstärkerschaltung um ein elektrisches Signal des Weggebers (33) zu verstärken,
einen Deckel (84), und
eine elastische Vergussmasse (76), welche zumindest zwischen dem Deckel (84) und dem Trägerelement (32) angeordnet ist,
**dadurch gekennzeichnet, dass**
das Dehnungsmesselement zum Einsetzen in eine Vertiefung (30) des Bauteils (15, 60) ausgebildet ist,
wobei der Deckel (84) sich auf dem Bauteil befestigen lässt und zum Abdecken der Vertiefung (30) des Bauteils (15, 60) vorgesehen ist, und wobei das Trägerelement (32) zur Anordnung am Boden der Vertiefung vorgesehen ist, wobei die dem Deckel (84) abgewandte Seite der Befestigungsabschnitte (32e1, 32e2) jeweils von der Vergussmasse (76) nicht bedeckt ist, und dass
zwischen dem Deckel (84) und den Befestigungsabschnitten (32e1, 32e2) Stifte (75) oder Federelemente (71) vorgesehen sind, welche das Trägerelement (32) an den Boden der Vertiefung anpressen, wenn der Deckel (84) auf dem Bauteil befestigt ist.

2. Dehnungsmesselement nach Anspruch 1, **dadurch gekennzeichnet, dass** der Weggeber ein Dehnungsmessstreifen (33) ist.

3. Dehnungsmesselement nach Anspruch 2, **dadurch gekennzeichnet, dass** das Dehnungsmesselement (28) eine mit einem Dünnschicht-Dehnungsmessstreifen (90, 91, 92, 93) versehene Keramikplatine ist.

4. Dehnungsmesselement nach Anspruch 1, **dadurch gekennzeichnet, dass** der Weggeber ein magneto-elastischer Geber ist.

5. Kraftmessvorrichtung in Form eines kraftübertragenden Bauteils (15, 60), **dadurch gekennzeichnet, dass** in einer Vertiefung (30) des Bauteils (15, 60) ein Dehnungsmesselement (28) gemäß einem der Ansprüche 1 bis 4 angeordnet ist.

6. Kraftmessvorrichtung nach Anspruch 5, **dadurch gekennzeichnet,**
**dass** am Boden (40) der Vertiefung (30) eine Ausnehmung (41), die in Dehnungsrichtung eine größere Länge als der Dehnungsabschnitt (32m) aufweist, vorgesehen ist, und
**dass** der Dehnungsabschnitt (32m) und an diesen angrenzende Bereiche des Trägerelements (32) über der Ausnehmung angeordnet (41) sind.

7. Kraftmessvorrichtung nach Anspruch 5 oder 6, **dadurch gekennzeichnet, dass** die Vertiefung (30) so ausgebildet ist, dass das Dehnungsmesselement (28) in der neutralen Faser (45) des Bauteils (15; 60) liegt.

8. Kraftmessvorrichtung nach einem der Ansprüche 5 bis 7, **dadurch gekennzeichnet, dass** die Befestigungsabschnitte (32e1, 32e2) des Trägerelements (32) mittels einer Klemmverbindung am Bauteil (15, 60) gehalten sind.

9. Kraftmessvorrichtung nach Anspruch 8, **dadurch gekennzeichnet, dass** die Klemmverbindung durch einen an dem Bauteil gehaltenen Deckel (74), der die Vertiefung (30) abschließt, und durch zwischen dem Deckel (74) und den Befestigungsabschnitten (32e1, 32e2) eingespannten Stiften (75) gebildet ist.

10. Kraftmessvorrichtung nach Anspruch 9, **dadurch gekennzeichnet, dass** die Stifte (75) jeweils eine größere Länge aufweisen als die Tiefe von einer Oberkante der Vertiefung (30) bis zu einem der Befestigungsabschnitte (32e1, 32e2) beträgt, und dass der Deckel (74) zum Einspannen der Stifte (75) unter Beibehaltung einer Restelastizität plastisch verformbar ist.

11. Kraftmessvorrichtung nach einem der Ansprüche 5 bis 10, **dadurch gekennzeichnet, dass** die Kraftmessvorrichtung als Unterlenker (15) eines Hubwerks (11) einer landwirtschaftlichen Maschine (10) ausgebildet ist.

12. Kraftmessvorrichtung nach einem der Ansprüche 5 bis 10, **dadurch gekennzeichnet, dass** die Kraftmessvorrichtung als Lasche (60) ausgebildet ist, die mit je einem Auge (61, 62) an ihren Längsenden versehen ist.

## Claims

1. Strain measuring element for fitting to a force-transmitting component (15, 60) in order to convert the force-dependent strain of the component (15, 60) into an electrical signal,
the strain measuring element being in the form of a pre-assembled structural unit (80), and the pre-assembled structural unit (80) comprising:
an elongate carrier element (32) which is subdivided into two fixing sections (32e1, 32e2), which are at a predefined distance (a) from each other in the direction of the strain, and a strain section (32m) which is provided between the fixing sections (32e1, 32e2), has a shorter length (d) in the direction of the strain than the distance (a) between the fixing sections (32e1, 32e2), and has a smaller cross section than the remaining carrier element (32),
a displacement transducer (33) which is connected to the strain section (32m) in order to record the strain of the strain section (32m),
an electronic amplifier circuit for amplifying an electrical signal from the displacement transducer (33),
a cover (84), and
an elastic potting compound (76) which is arranged at least between the cover (84) and the carrier element (32),
**characterized in that**
the strain measuring element is designed to be inserted into a depression (30) in the component (15, 60),
the cover (84) being able to be fixed on the component and being intended to cover the depression (30) in the component (15, 60), and the carrier element (32) being intended to be arranged on the base of the depression, that side of the fixing sections (32e1, 32e2) which faces away from the cover (84) respectively not being covered by the potting compound (76), and **in that**
pins (75) or spring elements (71) are provided between the cover (84) and the fixing sections (32e1, 32e2) and press the carrier element (32) onto the base of the depression when the cover (84) is fixed on the component.

2. Strain measuring element according to Claim 1, **characterized in that** the displacement transducer is a strain gauge (33).

3. Strain measuring element according to Claim 2, **characterized in that** the strain measuring element (28) is a ceramic circuit board provided with a thin-film strain gauge (90, 91, 92, 93).

4. Strain measuring element according to Claim 1, **characterized in that** the displacement transducer is a magneto-elastic transmitter.

5. Force measuring device in the form of a force-transmitting component (15, 60), **characterized in that** a strain measuring element (28) according to one of Claims 1 to 4 is arranged in a depression (30) in the component (15, 60).

6. Force measuring device according to Claim 5, **characterized in that**
a recess (41) which has a greater length than the strain section (32m) in the direction of the strain is provided on the base (40) of the depression (30), and
**in that** the strain section (32m) and regions of the carrier element (32) adjacent to the strain section are arranged above the recess (41).

7. Force measuring device according to Claim 5 or 6, **characterized in that** the depression (30) is designed in such a manner that the strain measuring element (28) is in the neutral axis (45) of the component (15; 60).

8. Force measuring device according to one of Claims 5 to 7, **characterized in that** the fixing sections (32e1, 32e2) of the carrier element (32) are held on the component (15, 60) by means of a clamped connection.

9. Force measuring device according to Claim 8, **characterized in that** the clamped connection is formed by a cover (74), which is held on the component and terminates the depression (30), and by pins (75) which are clamped in between the cover (74) and the fixing sections (32e1, 32e2).

10. Force measuring device according to Claim 9, **characterized in that** the pins (75) each have a greater length than the depth from an upper edge of the depression (30) to one of the fixing sections (32e1, 32e2), and **in that** the cover (74) is plastically deformable while maintaining residual elasticity in order to clamp in the pins (75).

11. Force measuring device according to one of Claims 5 to 10, **characterized in that** the force measuring device is in the form of a lower link (15) of a lifting mechanism (11) of an agricultural machine (10).

12. Force measuring device according to one of Claims 5 to 10, **characterized in that** the force measuring device is in the form of a link plate (60) which is provided with an eye (61, 62) at each of its longitudinal ends.

## Revendications

1. Elément de mesure d'allongement destiné à être placé sur un composant (15, 60) de transfert de force et servant à convertir en un signal électrique l'allongement du composant (15, 60) en fonction de la force,
l'élément de mesure d'allongement étant configuré comme module (80) prémonté et le module (80) prémonté comportant :
un élément allongé de support (32) qui est formé de deux sections de fixation (32e1, 32e2) qui présentent l'une par rapport à l'autre une distance prédéterminée (a) dans la direction d'allongement et d'une section d'allongement (32m) prévue entre les sections de fixation (32e1, 32e2), qui présente dans la direction d'allongement une longueur (d) plus petite que la distance (a) entre les sections de fixation (32e1, 32e2) et dont la section transversale est plus petite que celle du reste de l'élément de support (32),
une sonde de parcours (33) reliée à la section d'allongement (32m) et qui saisit l'allongement de la section d'allongement (32m),
un circuit électronique d'amplification qui amplifie le signal électrique de la sonde de parcours (33),
un couvercle (84) et
une pâte élastique de scellement (76) disposée au moins entre le couvercle (84) et l'élément de support (32),
**caractérisé en ce que**
l'élément de mesure d'allongement est configuré pour être utilisé dans un creux (30) du composant (15, 60),
**en ce que** le couvercle (84) peut être fixé sur le composant et est prévu pour recouvrir le creux (30) du composant (15, 60),
**en ce que** l'élément de support (32) est prévu pour être disposé au fond du creux et
**en ce que** le côté des sections de fixation (32e1, 32e2) non tourné vers le couvercle (84) n'est pas recouvert par la pâte de scellement (76) et
**en ce que** des tiges (75) ou des éléments élastiques (71) qui repoussent l'élément de support (32) dans le fond du creux lorsque le couvercle (84) est fixé sur le composant sont prévus entre le couvercle (84) et les sections de fixation (32e1, 32e2).

2. Elément de mesure d'allongement selon la revendication 1, **caractérisé en ce que** la sonde de parcours est un ruban (33) de mesure d'allongement.

3. Elément de mesure d'allongement selon la revendication 2, **caractérisé en ce que** l'élément (28) de mesure d'allongement est une plaque en céramique dotée de rubans (90, 91, 92, 93) de mesure d'allongement en couche mince.

4. Elément de mesure d'allongement selon la revendication 1, **caractérisé en ce que** la sonde de parcours est une sonde magnéto-élastique.

5. Dispositif de mesure de force qui présente la forme d'un composant (15, 60) de transfert de force, **caractérisé en ce qu'**un élément (28) de mesure d'allongement selon l'une des revendications 1 à 4 est disposé dans un creux (30) du composant (15, 60).

6. Dispositif de mesure de force selon la revendication 5, **caractérisé en ce qu'**une découpe (41) qui présente dans la direction d'allongement la longueur plus grande que la section d'allongement (32m) est prévue au fond (40) du creux (30) et
**en ce que** la section d'allongement (32m) et des parties de l'élément de support (32) qui lui sont adjacentes sont disposées au-dessus de la découpe (41).

7. Dispositif de mesure de force selon les revendications 5 ou 6, **caractérisé en ce que** le creux (30) est configuré de telle sorte que l'élément (28) de mesure d'allongement soit situé dans la fibre neutre (45) du composant (15; 60).

8. Dispositif de mesure de force selon l'une des revendications 5 à 7, **caractérisé en ce que** les sections de fixation (32e1, 32e2) de l'élément de support (32) sont maintenues sur le composant (15, 60) au moyen d'une liaison serrée.

9. Dispositif de mesure de force selon la revendication 8, **caractérisé en ce que** la liaison serrée est formée par un couvercle (74) maintenu sur le composant et fermant le creux (30) et par des tiges (75) serrées entre le couvercle (74) et les sections de fixation (32e1, 32e2).

10. Dispositif de mesure de force selon la revendication 9, **caractérisé en ce que** les tiges (75) présentent toutes une plus grande longueur que la profondeur du bord supérieur du creux (30) jusqu'à une des sections de fixation (32e1, 32e2) et **en ce que** le couvercle (74) est plastiquement déformable pour serrer les tiges (75) tout en maintenant une élasticité résiduelle.

11. Dispositif de mesure de force selon l'une des revendications 5 à 10, **caractérisé en ce que** le dispositif de mesure de force est configuré comme bielle inférieure (15) d'un mécanisme de levage (11) d'une machine agricole (10).

12. Dispositif de mesure de force selon l'une des revendications 5 à 10, **caractérisé en ce que** le dispositif de mesure de force est configuré comme patte (60) dotée d'oeillets (61, 62) respectifs à ses extrémités longitudinales.
